# EUROPEAN PATENT SPECIFICATION

(11) **EP 0 668 170 B1**
(45) Date of publication and mention of the grant of the patent: **24.03.1999**
(21) Application number: 95301169.9
(22) Date of filing: 22.02.1995
(51) Int. Cl.: B44C 1/17, B44C 1/14, C08G 59/18, C03C 17/38

(54) **Hot-stamping glass, ceramics and other substrates**
Heissprägen von Glas, Keramik und anderen Substraten
Estampage à chaud de verre, de céramiques et des autres substrats

(30) Priority: 22.02.1994 US 199415
(43) Date of publication of application: 23.08.1995
(60) Divisional application: 97202717.1
(73) Proprietor: Revlon Consumer Products Corporation, New York, NY 10022 (US)
(72) Inventor: Kamen, Melvin Edwin, Highlands, New Jersey 07732 (US); Patel, Bhupendra, Edison, New Jersey 08820 (US)
(74) Representative: Sanderson, Laurence Andrew

(56) References cited:
- EP-A- 0 139 042
- EP-A- 0 233 358
- EP-A- 0 626 354
- US-A- 4 874 798
- US-A- 5 104 719
- US-A- 5 391 247
- PATENT ABSTRACTS OF JAPAN vol. 009, no. 041 (C-267), 21 February 1985 & JP 59 184746 A (KOUA GLASS KK), 20 October 1984,
- PATENT ABSTRACTS OF JAPAN vol. 006, no. 260 (M-180), 18 December 1982 & JP 57 152992 A (KAMAYA KAGAKU KOGYO KK), 21 September 1982,
- PATENT ABSTRACTS OF JAPAN vol. 012, no. 218 (M-711), 22 June 1988 & JP 63 017075 A (HINO JUSHI:KK), 25 January 1988,

## Description

This invention relates to the application of decorative coatings to glass, ceramics and perhaps other substrates, by a procedure akin to that known as hot-stamping, and is an important development of our earlier invention as described and claimed in our previous European Patent Application No. 93 3 04160.0, now EPA 0 626 354.

The well-established hot-stamping procedure involves applying both heat and pressure by means of a heated die or roller (hereinafter for convenience referred to generically as a "hot compress") to a so-called hot-stamping foil, consisting of a pigmented colour or metallized surface film borne on a usually-polyester carrier, so as by means of the hot compress to force it into contact with a thermoplastic substrate, and thereby soften the thermoplastic substrate and also activate the film-coating on the foil, thereby enabling it to form a strong physico-chemical bond with the underlying thermoplastic substrate wherever heat and pressure have been applied to the foil, but not elsewhere. When subsequently the foil is pulled away, just the areas of the film which have been subjected to the hot-stamping remain affixed to the plastic substrate, and the remainder peels away.

In order to carry out this hot-stamping operation one normally employs either a vertical stamping machine or a roll-on machine. The vertical stamping machine contains a heated compress of die of brass, steel or silicone rubber, performed to define the deserved design, which compress serves to apply both heat and pressure and thus to transfer the desired design defined by the die (whatever that design may be - thus decorative areas and/or writing or other printed Information) from the film onto the thermoplastic substrate, as each part is positioned beneath the compress. Roll-on methods utilize a silicone rubber roller or an arcuate die as the hot compress to transfer the desired design from the foil onto the thermoplastic substrate, in either a continuous or batch process.

Hot-stamping is an efficient and inexpensive way to apply decoration to thermoplastic substrates. Unfortunately however hot-stamping of this nature cannot be used with glass, because glass melts at a much higher temperature than most thermoplastic materials. Consequently decoration in the form of gold leaf, colour design or printing etc. is generally applied to glass containers by a glazing process similar to that used with ceramics. Thus for example in gold-leafing the gold decoration is applied to the glass container by a variety of methods such as silk-screen printing, etc. The glass container is then subjected to extremely high kiln temperatures, and in essence the decoration is baked on. Unfortunately this process is however time-consuming, expensive, energy-intensive and raises safety considerations due to the high temperatures that have to be employed and the nature of the gases which are evolved in the operation of the kilns.

There has thus been a considerable and long-standing need for a simple, economical and ultra-safe procedure for applying decoration to glass substrates, quite unfulfilled until we devised the method for achieving these objectives described in our above-mentioned EPA 0,626,354, which is akin to the known hot-stamping process but operable on glass and ceramics.

EPA 0,626,354 concerns a method of applying a decorative coating to glass using an adhesive ink comprising a monomer, a polymer dissolved in the monomer and a polymerisation-initiating agent. Japanese Laid Open Application 63017075 also describes the application of a decorative pattern to glass using printing ink and a hot-stamping foil.

However, the problems with the recently-devised procedure, as set out in our EPA 0,626,354, is that the inks do not always adhere to the glass to the degree required for commercial decorating purposes.

We have therefore carried out extensive investigations, directed to the search for an ink with excellent bond strength to glass and which at the same time is capable of adhering hot-stamping foil. It has been thus discovered that the key to the achievement of commercially-acceptable decorating lies in the use of one particular, previously-unconsidered, class of cationically radiation-curable cycloaliphatic epoxides.

According to the present invention there is provided a method for applying a decorative coating to a glass, ceramic or indeed other substrate, which comprises the steps of:
(a) applying a desired design to the substrate with a curable adhesive ink composition containing a cationically radiation-curable cycloaliphatic epoxide;
(b) curing the adhesive ink on the substrate by exposing it to the radiation by which it is curable, thereby to bond the cured ink to the substrate;
(c) compressing a hot-stamping foil bearing a film of decorative material against the substrate with a hot compress defining a desired design and heated to a temperature sufficient to cause the film to adhere to the cured ink pattern but not to the ink-free areas of the substrate; and
(d) removing the compress, thereby leaving the film of decorative material from the hot-stamping foil adhering to the cured ink pattern only.

A wide variety of glass or ceramic articles may be provided with a decorative coating by means of the method of this invention, and so far as we are aware there is no limit on the kind of glass or ceramics that may thus be decorated. Thus the term "substrate" as used herein embraces all kinds of glass and ceramic (including china) substrates and indeed also others, provided only that they require decoration..and that there is no equally effective and cheaper way of achieving the same objective, as for instance there is with thermoplastic substrates. In short, this technique will work with a thermoplastic substrate, but there is no need to employ it since conventional hot-stamping is fully effective on thermoplastic substrates and tends to be cheaper.

Such substrates may for instance take the form of containers e.g. bottles, dishes, cups and glasses, as well as also purely decorative objects eg. figurines, vases, windows, tiles and so on.

In the first step of the decorative method of this invention the desired decorative or other pattern is essentially "painted" onto the glass utilizing an adhesive ink composition as the "paint" . The "painting" may be accomplished by silk-screening, screen-printing, offset-printing, stencilling, actual painting (with a brush) or any other of the wide variety of available methods.

Generally-speaking we currently prefer to apply the desired pattern of adhesive ink by silk-screening it onto the glass container, utilizing the traditional screen and squeegee well known to those skilled in the art, because it is adaptable to on-line production. However the ink may be applied by means of hand-held applicators such as paintbrushes or the like, especially where the ink is to be applied to a substrate in the form of a figurine or other like highly-decorative article which is not readily amenable to screen-printing.

The curable adhesive ink composition used in the present invention must be one based upon a cationically radiation-cured cycloaliphatic epoxide. The term "cationically radiation-curable" is here used in the sense that it has become accepted in the radiation curing art, and roughly-speaking means that the radiation curing takes place in air - as contrasted with anionic curing, which must take place under anaerobic conditions.

The cycloaliphatic epoxide employed will preferably be one having at least two epoxy groups per molecule. Polymeric cycloaliphatic epoxides are however also suitable, such as those formed as the reaction products between epichlorohydrin and phenol or a phenolformaldehyde resin, diepoxy resin, epoxidized oils and epoxidized polyolefins. Such epoxides include novolac epoxides, glycidyl ethers of various types including diglycidyl ethers of bisphenol, diglycidyl ethers of butanediol, and the like. Also suitable are homopolymers and copolymers that contain pendant epoxide groups such as those made from glycidyl acrylate and/or methacrylate with or without other ethylenically unsatured monomers. Cycloaliphatic epoxides are however also suitable, such as those set forth in U.S. Patents Nos. 3,027,357, 3,890,194, 2,890,197, 3,031,434, 3,125,592, 3,201,360 and 5,204,930 (the disclosure of all of which are incorporated herein by cross-reference). Preferred are 3,4-epoxycyclohexylmethyl-3,4-epoxycyclohexane carboxylate, bis-(3,4-epoxy-cyclohexylmethyl)-adipate, vinlycyclohexene diepoxide, bis(2,3-epoxycyclophenyl)ether, epoxidized butadiene, 2,3-epoxy-2-methylcyclohexylmethyl-3,4-epoxy-2-methylcyclohexane carboxylate, or mixtures thereof.

The preferred cycloaliphatic epoxides are the cationically UV-cured cycloaliphatic epoxides sold under the tradename CYRACURE by Union Carbide Chemicals and Plastics Company, Danbury, Connecticut, USA., such as CYRACURE UVR 6110, 6379, 6351 and 5200.

The proportion of the cationically UV-cured cycloaliphatic epoxide to be employed in the ink composition is not highly critical, but we recommend the use of from about 10% to about 90% thereof, by weight of the composition, and preferably 35-90%.

If the ink composition is to be cured with actinic radiation (including UV light) rather than with an electron beam, it is then very desirable, indeed almost a necessity that the ink composition should also contain a photoinitiator, which will catalyze the polymerization of the cycloaliphatic epoxide. If an electron beam is used, such a photoinitiator is not necessary. However, since preparing the composition one cannot always be sure how it will subsequently be cured, it is an advisable precaution always to include a photoinitiator therein.

Especially suitable photoinitators are carbonyl compounds such as ketones and derivatives thereof, for example methly ethyl ketone, benzophenone, benzyl dimethyl ketal, 1-hydroxycyclohexylphenylketone, 2,1-dimethoxy-2-phenylacetophenone, diethoxyacetophenone and 2-methyl-1-(methylethylphenyl)-2-(4-morpholinl)-1-propanone.

Other photosensitive onium salts are particularly good UV activated photoinitiators. The use of photosensitive onium salts to promote the curing of epoxides when exposed to UV radiation is described in U.S. Patents Nos. 4,058,401, 4,138,255 and 4,161,478, the disclosure of which is incorporated herein by cross-reference. The photosensitive onium salts mentioned in these Patents are good UV-light photoinitiators. These preferred photointiators are triaryl sulphonium salts sold by Union Carbide under the tradename CYRACURE UVI 6974.

The proportion of photoinitiator needed is not critical, but we recommend the use from about 0.5% to 20%, by weight of the composition, and preferably 3-15% by weight.

The ink composition may also advantageously include an ester-containing polyol having a molecular weight of less than 850 and a vicosity of less than 0.6 Pa s (60 poise), which serves the purpose of controlling its vicosity.

Such ester-containing polyols are oligomers prepared by methods well known in the esterification or alkyd resin arts. Suitable polyols are for instance described in U.S. Patent No. 3,994,851, the disclosure of which is hereby incorporated by cross-reference. The ester-containing polyols are the reaction product of polycarboxylic acids (such as adipic, azeleic, malic, fumaric, succinic or glutaric acids) with a polyol (such as ethylene glycol, neopentyl glycol, diethylene glycol, trimethylolpropane monoallyl ether, 1,6-hexandiol, etc.).

The preferred ester-containing polyols are the polycaprolactone polyols sold under the tradename "TONE Polyols" by Union Carbide, particularly TONE Polyol 310 or trimethylolpropane caprolactone.

The proportion of the ester-containing polyol to be used is not critical, but we recommend the use of from about 1% to about 20% by weight of the composition, and preferably 3-15%, of the ester-containing polyol.

The curable adhesive ink composition may also desirably contain an adhesion-promotor, thus an agent that serves to increase the adhesion of the cycloaliphatic epoxide to the substrate. If the substrate is glass, silanes are excellent coupling agents with glass, and will promote adhesion of the ink to the substrate. Suitable acryloxy-functional silanes are described in U.S. Patent No. 5,221,560, the disclosure of which is hereby incorporated by cross-reference.

Such acryloxy-functional silanes include:
3-methacryloxypropyltrimethyloxysilane,
3-acryloxypropyl-trimethoxysilane,
2-methacryloxyethyltrimethyoxysilane,
2-acryloxyethytrimethoxysilane,
3-methacryloxypropyltriethoxysilane,
3-acryloxypropyltrimethoxysilane,
3-acryloxypropyltriethoxysilane,
2-methacryloxyethyltriethoxysilane,
3-acryloxypropyltriethoxysilane,
2-methacryloxyethyltriethoxysilane, and
2-methacryloxyethyltriethoxysilane, etc.

Glycidoxy-functional silanes may also be suitable. Such glycidoxysilanes include 3-glycidoxypropyltrimethoxysilane, 2-glycidoxyethyltrimethoxysilane, 3-glycid-oxypropyltriethoxysilane, 2-glycidoxyethyltriethoxysilane, 3-glycidoxypropyltrimethylsilane and so on.

The glycidoxy silanes are preferred, in particular 3-glycidoxypropyltrimethylsilane. We recommend the use of from about 1% to about 10%, by weight of the composition, of an adhesion promotor, which can usually be relied upon to cause improved adhesion of the ink to the substrate.

It is generally desirable that the curable adhesive ink composition should also include a defoaming agent, because it promotes smooth, even application of the ink onto the substrate, eliminating bubbles and distortions.

A variety of defoaming agents are suitable, but those which we currently prefer are polyalkyl acrylics, such as the polyvinyl butyl ether in Stoddard solvent [this is a petroleum distillate, widely used as a dry-cleaning solvent, with a minimum flash point of 35°C (100°F) and a distillation range range of from not less than 50% over at 177°C (350°F) up to an end point not higher than 210°C (410°F)] as sold under the tradenames BYK-052 and BYK-053 by BYK - Chemie.

The proportion of defoaming agent to be employed is not critical, but we generally recommend the use of from about 1 to 20%, by weight of the composition and preferably 3-15%.

It is of course permissible, and for some purposes it may be advantageous, to incorporate other ingredients in the curable adhesive ink composition, including for instance stabilizers, inert fillers, wetting agents, levelling agents and so on. If present, these ingredients can be in the range of from about 1 to about 15% by weight of the total composition.

In the second step of the decorative method of this invention, thus after the curable adhesive ink composition has been applied to the substrate, the cationically radiation-curable cycloaliphatic epoxide (and thus the ink composition as a whole) must be cured by exposure to the radiation by which it is curable. We have found that the cycloaliphatic epoxide may be cured by an electron beam without further assistance, but actinic radiation (including ultra-violet radiation) will also serve to cure the epoxide (especially if assisted by the presence of a photoinitiator) and is to be preferred over an electron beam.

Therefore, especially if it is for use with actinic radiation, the curable adhesive ink composition will very preferably include a photo-initiator, which catalyzes the polymerization of the cycloaliphatic epoxide.

For the avoidance of doubt it is perhaps desirable to observe that the terms "actinic radiation" and "ultra-violet radiation" are here used in their normal sense, that is to say :
the term "actinic radiation" in general means light in the violet and ultra-violet regions which will bring about chemical changes, and may be regarded as corresponding to wavelengths of from 4 to 600 nm; and
the term "ultra-violet (or UV) radiation" refers to the non-visible part of actinic radiation, and may be regarded as corresponding to wavelengths of from 4 to 400nm., and preferably (for present purposes) 325-365nm.

The substrate bearing the decorative pattern of ink composition is exposed to UV light (or other radiation) for a time sufficient to effect polymerization of the epoxide and the polyol, usually for a period of from 1 to 30 minutes, and preferably for from 2 to 25 minutes, depending on how thickly the ink has been applied to the substrate.

This exposure may be conveniently accomplished by use of so-called UV-conveyers, which consist of a conveyor belt situated beneath an ultraviolet lamp, such as those manufactured by Fusion Systems. When the substrate is placed on the conveyor belt it is moved along and is irradiated by the lamp. Obviously, where longer cure times are needed, the substrate can be passed successively through several conveyors in line, or several times through the same conveyor. The conveyor system is set up so that the substrate passes through the UV-light for the total amount of time appropriate to cure the ink composition and adhere to the substrate.

In the third step of the decorative method of this invention, thus after the ink composition has been cured and is thus fully adhered to the substrate, the substrate must be stamped with hot-stamping foil, that is say a foil bearing a film of decorative material is compressed against the substrate with a compress heated to a sufficient temperature to cause the film on the hot-stamping foil to adhere to the cured ink design, but not to the ink-free areas of the glass.

The duration of the compression and the temperature of the compress are interdependent, and the optimum conditions for both can and will be determined by competent operatives in each individual case. By way of general guidance it can however be said that we have found that the compress should usually be heated to a temperature in the range of 395K-478K (250-400°F) preferably 395K-450K (250-350°F) to achieve adherence of the foil to the cured ink design. The compress must of course be pressed tightly against the substrate, and the period of such compression will range from fractions of a second up to several minutes, depending on the nature of the compress used, its temperature and the specific cycloaliphatic epoxide.

The term "hot-stamping foil" means, in general, a laminate comprised of a carrier material (often polyester, celluse acetate, or another similar material capable of release), a release film, and a decorative or colour coat, in that order. The decorative coat is usually colour or metallized coat. The metallized coat can be actual gold, silver , or aluminium which is coloured to look like gold or silver, or have holographic properties. The coloured layer is most often applied by vacuum metallization.

More specifically, hot-stamping foil can be defined as a multilayer web comprising a backing film-carrier, a release coating, one or more protective top coatings, one or more colour coatings, and a hot-melt adhesive, in that order.

Generally, the hot-melt adhesive layer of the foil is compressed against the substrate with a heated die. The hot-melt adhesive layer adheres to the substrate, and the application of heat also causes the release layer to release the backing film carrier from the protective top-coat layer, leaving the protective top-coat layer exposed on the surface of the substrate.

The release coating is either wax (or a wax-like material) or a thermoplastic material, which melts upon application of heat to release the protective top-coat layer from the backing for release layers include ethylene vinyl acetate (EVA). acrylics, polyvinylchlorides (PVC), polyamides, or similar thermoplastic materials as set forth in U.S. Patent No. 5,104,719, the disclosure of which is hereby incorporated by cross-reference.

The protective top-coat is usually a lacquer of some type, which is capable of protecting the colour or metallized layer.

The final layer is a hot-melt adhesive, which can be a wide variety of substances, and is selected so that it is capable, upon application of heat, of adhering to the substrate to which it is applied. Suitable hot-melt adhesives generally are thermoplastic materials, such as EVA, PVC and the like.

In the fourth step of the decorative method of this invention, the hot compress is removed and along with it the foil, leaving a portion of the foil adhering to the substrate.

Thus, a portion of the hot-stamping foil, in particular the hot-melt adhesive layer and the metallized or colour layer, as well as the protective top-coat if present (in that order) remain affixed to the cured ink design such that the hot-melt adhesive adheres to the cured ink design, followed by the coloured coating layer and the protective top-coat layer on the surface of the container. The protective top-coat may or may not contain part of the release coat layer, which is designed to release the carrier layer from the protective top coat.

The decoration which is applied to the substrate is extremely durable and capable of withstanding conditions found in normal handling operations.

The adhesive ink composition for use in the method herein disclosed, which adhesive ink composition is or includes a radiation-curable polymer composition therefore suitably comprises:
- from 10 to 90% of a cationically radiation-curable cycloaliphatic epoxide,
- from 1 to 20% of an ester-containing polyol, and
- from 1 to 20% of a defoaming agent,
as well as optionally other ingredients.
The ink composition may comprise from 1 to 50% of pigment.

In addition, the preferred composition contains from 3 to 15% of a photoinitiator, and it may also contain from 1 to 10% of a silane.

According to a further feature of this invention there are also provided containers, having an inner surface and an outer surface, in which:
- a) the outer surface has bonded thereto a partial coating of a cured adhesive ink which is a cationically radiation-cured cycloaliphatic epoxide, in a design that covers less than the whole of the said outer surface; and
- b) the ink design is entirely overlaid by a multilayer web comprising (i) a hot-melt adhesive, (ii) a colour coating and (iii) a protective top-coat (in that order from the ink design outwards) said web being adherent to the cured adhesive ink and covering only said ink and not extending to the ink-free areas of the said outer surface.

While the invention extends to containers of all kinds, even thermoplastic ones, that bear an outer coating of this type it fulfills its potential when the container is, as preferred, either glass or ceramic.

In order that the invention may be well understood it will now be described in more detail, though only by way of illustration, with reference to the following examples:

### Example 1

A clear adhesive ink composition was made up as follows:

| **w/w%** | **grams** |
|---|---|
| Cycloaliphatic epoxide (CYRACURE UVR 6110) 72.73 | 50 |
| Trimethylolpropane caprolactone (TONE Polyol 310) 9.10 | 6.25 |
| Triaryl sulphonium salts(s) (CYRACURE UVI 6974) 7.27 | 5.00 |
| Polyvinyl butyl ether defoamer (BYK-053) 10.90 | 7.5 |

These ingredients were mixed until dissolved, and were then ready for use as described in subsequent examples.

### Example 2

The ink composition of Example 1 was silk-screened onto a glass makeup container using a 255 line screen (having about 50 fibres per square centimetre, or (255 fibres per square inch) imprinted with a decorative design.

The glass container was passed through a 300 watt/9.2 metres (30 feet) per minute UV-conveyor for a total of 5 minutes to effect curing of the ink.

Gold hot-stamping foil (Crown Royal Leaf, Paterson, New Jersey, USA) was compressed against the container with a die heated to 395K (250°F) for several seconds.

The die was then removed, leaving a portion of foil adhered only to the ink design, and on peeling off the foil a gold metallic decorative design identical in appearance to gold leaf was left on the surface of the glass makeup container.

### Example 3

The ink composition of Example 1 was used to hand-paint a simple design onto the side of a ceramic bowl, using a fine-tipped sable brush.

The bowl was subjected to UV-radiation by passing it through a 300 watt/9.2 metres (30 feet) per minute UV-conveyor for about 4 minutes.

Silver holographic hot-stamping foil was compressed against the cured ink design with a die heated to 288K (300°F) for several seconds.

Then the die was removed, leaving a portion of the hot-stamping foil adhered to the cured ink design, resulting in a metallic silver decoration.

## Claims

1. A method for applying a decorative coating to a glass, ceramic or other substrate with hot-stamping foil which comprises the steps of:
- a) applying a desired design to the substrate with a curable adhesive ink composition containing a cationically radiation-curable cycloaliphatic epoxide;
- b) curing the adhesive ink on the substrate by exposing it to the radiation by which it is curable, thereby to bond the cured ink composition to the substrate;
- c) compressing a hot-stamping foil bearing a film of decorative material against the substrate with a hot-compress defining a desired design and heated to a temperature sufficient to cause the film to adhere to the cured ink pattern but not to the ink-free areas of the substrate; and
- d) removing the compress, thereby leaving the film of decorative material from the hot-stamping foil adhering to the cured ink pattern only..

2. A method as claimed in claim 1, in which the ink is applied to the substrate by silk-screening.

3. A method as claimed in claim 1 or claim 2, in which the cationically radiation-curable cycloaliphatic epoxide is one having at least two epoxide groups per molecule.

4. A method as claimed in any of the preceding claims in which the cationically radiation-curable cycloaliphatic epoxide is one or a mixture of more than one of the following, namely 3,4-epoxycyclohexylmethyl-3,4-epoxycyclohexane carboxylate, bis-(3,4-epoxycyclohexylmethyl)-adipate, vinylcyclohexene diepoxide, bis(2,3-epoxycyclophenyl)ether, epoxidized butadiene and 2,3-epoxy-2-methylcyciohexylmethyl-3,4-epoxy-2-methylcyclohexane carboxylate.

5. A method as claimed in any of the preceding claims, in which the ink composition further comprises from 1 to 20% of an ester-containing polyol.

6. A method as claimed in claim 5, in which the ester-containing polyol is the reaction product of a polycarboxylic acid with a polyol.

7. A method as claimed in claim 5 or claim 6, in which the ester-containing polyol has a molecular weight of less than 850, and a viscosity of less than 60 Pa.s (60 poise).

8. A method as claimed in any of claims 5 to 7, in which the ester-containing polyol is a polycaprolactone polyol.

9. A method as claimed in any of the previous claims, in which the ink composition also comprises from 1 to 10% of a defoaming agent.

10. A method as claimed in claim 9, in which the defoaming agent is polyvinylbutylether.

11. A method as claimed in any of the preceding claims, in which the ink composition further comprises from 1 to 50% of pigment.

12. A method as claimed in any of the preceding claims, in which the cycloaliphatic epoxide is cured by exposure to ultraviolet radiation.

13. A method as claimed in any of the preceding claims, in which the hot-stamping foil comprises a carrier material, a release film and a decorative coating, in that order.

14. A method as claimed in any of the preceding claims, in which the hot-stamping foil is a multilayer web consisting essentially of a backing film carrier, a release coating, a protective coating, a colour coating and a hot-melt adhesive, in that order.

15. A method as claimed in any of the preceding claims, in which the compress is heated to a temperature of at least 395K (250°F).

16. A container having an inner surface and an outer surface, in which:
- a) the outer surface has bonded thereto a partial coating of a cured adhesive ink which is a cationically radiation-cured cycloaliphatic epoxide, in a design that covers less than the whole of the said outer surface; and
- b) the ink design is entirely overlaid by a multilayer web comprising (i) a hot-melt adhesive, (ii) a colour coating and (iii) a protective top-coat in that order from the ink design outwards, said web being adherent to the cured adhesive ink and covering only said ink and not extending to the ink-free areas of the said outer surface.

17. A container as claimed in claim 16, which is glass.

18. A container as claimed in claim 16, which is ceramic.

## Patentansprüche

1. Verfahren, um eine dekorative Beschichtung auf Glas, Keramik oder ein anderes Substrat mit einer Heißprägefolie aufzubringen, das die Stufen umfaßt, daß man:
a) ein gewünschtes Muster auf das Substrat aufträgt mit einer härtbaren klebenden Druckfarbenzusammensetzung, die ein durch kationische Strahlung härtbares cycloaliphatisches Epoxid enthält;
b) die haftende Druckfarbe auf dem Substrat härtet, indem sie der Strahlung ausgesetzt wird, durch die sie härtbar ist, wodurch sich die gehärtete Druckfarbenzusammensetzung mit dem Substrat verbindet;
c) eine Heißprägefolie, die einen Film mit einem schmückenden Material trägt, auf das Substrat preßt mit einer Heißpresse, die ein gewünschtes Muster definiert, und auf eine Temperatur erhitzt, die ausreicht, um zu verursachen, daß der Film an dem gehärteten Druckfarbenmuster haftet, nicht aber auf den druckfarbenfreien Bereichen des Substrats und
d) die Presse entfernt, wodurch der Film aus schmückendem Material von der Heißprägefolie zurückbleibt, der nur an dem gehärteten Druckfarbenmuster haftet.

2. Verfahren nach Anspruch 1, worin die Druckfarbe auf das Substrat durch Filmdruck aufgetragen wird.

3. Verfahren nach Anspruch 1 oder 2, worin das durch kationische Strahlung härtbare cycloaliphatische Epoxid eines mit mindestens zwei Epoxidgruppen pro Molekül ist.

4. Verfahren nach einem der vorhergehenden Ansprüche, worin das durch kationische Strahlung härtbare cycloaliphatische Epoxid eines der folgenden oder eine Mischung von mehreren davon ist, nämlich 3,4-Epoxycyclohexylmethyl-3,4-epoxycyclohexancarboxylat, Bis-(3,4-epoxycyclohexylmethyl)-adipat, Vinylcyclohexendiepoxid, Bis-(2,3-epoxycyclophenyl)ether, epoxidiertes Butadien und 2,3-Epoxy-2-methylcyclohexylmethyl-3,4-epoxy-2-methylcyclohexancaboxylat.

5. Verfahren nach einem der vorhergehenden Ansprüche, worin die Druckfarbenzusammensetzung weiterhin 1 is 20% eines esterhaltigen Polyols enthält.

6. Verfahren nach Anspruch 5, worin das esterhaltige Polyol das Reaktionsprodukt einer Polycarbonsäure mit einem Polyol ist.

7. Verfahren nach Anspruch 5 oder Anspruch 6, worin das esterhaltige Polyol ein Molekulargewicht von weniger als 850 und eine Viskosität von weniger als 60 Pa·s (60 poise) hat.

8. Verfahren nach einem der Ansprüche 5 bis 7, worin das esterhaltige Polyol Polycaprolactonpolyol ist.

9. Verfahren nach einem der vorhergehenden Ansprüche, worin die Druckfarbenzusammensetzung auch 1 bis 10% eines Entschäumungsmittel enthält.

10. Verfahren nach Anspruch 9, worin das Entschäumungsmittel Polyvinylbutylether ist.

11. Verfahren nach einem der vorhergehenden Ansprüche, worin die Druckfarbenzusammensetzung weiterhin 1 bis 50% Pigment enthält.

12. Verfahren nach einem der vorhergehenden Ansprüche, worin das cycloaliphatische Epoxid durch Bestrahlung mit Ultraviolettstrahlung gehärtet wird.

13. Verfahren nach einem der vorhergehenden Ansprüche, worin die Heißprägefolie ein Trägermaterial, einen Trennfilm und eine dekorative Beschichtung umfaßt, in dieser Reihenfolge.

14. Verfahren nach einem der vorhergehenden Ansprüche, worin die Heißprägefolie eine mehrschichtige Bahn ist, die im wesentlichen aus einem Trägerfilm, einer Trennbeschichtung, einer Schutzbeschichtung, einer Farbbeschichtung und einem heißschmelzenden Klebstoff, in dieser Reihenfolge, besteht.

15. Verfahren nach einem der vorhergehenden Ansprüche, worin die Presse auf eine Temperatur von mindestens 395 K (250°F), erhitzt wird.

16. Behälter mit einer inneren Oberfläche und einer äußeren Oberfläche, worin
a) die äußere Oberfläche eine Teilbeschichtung aus einer gehärteten klebenden Druckfarbe aufweist, die ein durch kationische Strahlung gehärtetes cycloaliphatisches Epoxid ist, mit einem Muster, das weniger als die gesamte äußere Oberfläche deckt, und
b) das Druckfarbenmuster vollständig von einer mehrschichtigen Bahn überlagert ist, die
(i) einen heißschmelzenden Kleber,
(ii) eine Farbbeschichtung und
(iii) eine schützende Deckschicht in dieser Reihenfolge von dem Druckfarbenmuster nach aussen umfaßt, wobei die Bahn an der gehärteten klebenden Druckfarbe haftet und nur die Druckfarbe bedeckt und sich nicht über die druckfarbenfreien Bereiche der äußeren Oberfläche erstreckt.

17. Behälter nach Anspruch 6, der aus Glas ist.

18. Behälter nach Anspruch 6, der aus Keramik ist.

## Revendications

1. Procédé pour appliquer un revêtement décoratif sur un verre, une céramique ou un autre substrat, à l'aide d'une feuille pour grainage à chaud, qui comprend les étapes consistant :
a) à appliquer un dessin voulu sur le substrat à l'aide d'une composition d'encre adhésive durcissable contenant un époxyde cycloaliphatique pouvant subir un durcissement cationique par rayonnement ;
b) à durcir l'encre adhésive sur le substrat par exposition au rayonnement sous l'effet duquel il peut durcir, de façon à coller la composition d'encre durcie au substrat ;
c) à comprimer une feuille pour grainage à chaud, portant un film en le matériau décoratif, contre le substrat, à l'aide d'une presse de compression à chaud, qui définit un dessin voulu, et qui est chauffé à une température suffisante pour amener le film à adhérer à la structure d'encre durcie, mais non sur les zones du substrat ne comportant pas d'encre ; et
d) à retirer la presse de compression, de façon à ne laisser que le film du matériau décoratif provenant de la feuille pour grainage à chaud qui adhère à la structure d'encre durcie.

2. Procédé selon la revendication 1, dans lequel l'encre est appliquée sur le substrat par sérigraphie.

3. Procédé selon la revendication 1 ou 2, dans lequel l'époxyde cycloaliphatique pouvant subi un durcissement cationique par rayonnement est un époxyde ayant au moins deux groupes époxy par molécule.

4. Procédé selon l'une quelconque des revendications précédentes, dans lequel l'époxyde cycloaliphatique pouvant subi un durcissement cationique par rayonnement est l'un des composés suivants, ou un mélange de plusieurs des composés suivants, à savoir le 3,4-époxycyclohexanecarboxylate de 3,4-époxycyclohexylméthyle, l'adipate de bis(3,4-époxycyclohexylméthyle), le vinylcy-clohexène-diépoxyde, l'oxyde de bis(2,3-époxycyclophényle), le butadiène époxydé et le 3,4-époxy-2-méthylcyclohexanecarboxylate de 2,3-époxy-2-méthylcyclohexylméthyle.

5. Procédé selon l'une quelconque des revendications précédentes, dans lequel la composition d'encre comprend en outre de 1 à 20 % d'un polyol contenant un ester.

6. Procédé selon la revendication 5, dans lequel le polyol contenant un ester est le produit de la réaction d'un acide polycarboxylique avec un polyol.

7. Procédé selon la revendication 5 ou 6, dans lequel le polyol contenant un ester a une masse moléculaire inférieure à 850 et une viscosité inférieure à 60 Pa.s (60 poises).

8. Procédé selon l'une quelconque des revendications 5 à 7, dans lequel le polyol contenant un ester est un polycaprolactone-polyol.

9. Procédé selon l'une quelconque des revendications précédentes, dans lequel la composition d'encre comprend aussi de 1 à 10 % d'un agent anti-moussant.

10. Procédé selon la revendication 9, dans lequel l'agent anti-moussant est le polyvinylbutyléther.

11. Procédé selon l'une quelconque des revendications précédentes, dans lequel la composition d'encre comprend en outre de 1 à 50 % d'un pigment.

12. Procédé selon l'une quelconque des revendications précédentes, dans lequel l'époxyde cycloaliphatique est durci par exposition à un rayonnement ultraviolet.

13. Procédé selon l'une quelconque des revendications précédentes, dans lequel la feuille pour grainage à chaud comprend dans cet ordre un matériau support, un film anti-adhésif et un revêtement décoratif.

14. Procédé selon l'une quelconque des revendications précédentes, dans lequel la feuille pour grainage à chaud est un voile multicouche constitué essentiellement, dans cet ordre, d'un support pelliculaire d'envers, d'un revêtement anti-adhésif, d'un revêtement protecteur, d'un revêtement en couleur et d'un adhésif fusible.

15. Procédé selon l'une quelconque des revendications précédentes, dans lequel la presse de compression est chauffée à une température d'au moins 395 K (250°F).

16. Récipient ayant une surface intérieure et une surface extérieure, dans lequel :
a) à la surface extérieure est collé un revêtement partiel constitué d'une encre adhésive durcie, qui est un époxyde cycloaliphatique ayant subi un durcissement cationique par rayonnement, selon un dessin qui recouvre moins de la totalité de ladite surface extérieure ; et
b) le dessin d'encre est entièrement recouvert d'un voile multicouche comprenant, dans cet ordre en allant vers l'extérieur à partir du dessin d'encre, (i) un adhésif fusible, (ii) un revêtement en couleur, et (iii) une couche de finition protectrice, ledit voile adhérant à l'encre adhésive durcie et ne recouvrant que ladite encre, et ne s'étendant pas sur les zones sans encre de ladite surface extérieure.

17. Récipient selon la revendication 16, qui est en verre.

18. Récipient selon la revendication 16, qui est en céramique.
